# EUROPÄISCHE PATENTANMELDUNG

(11) **EP 3 253 051 A1**
(43) Veröffentlichungstag der Anmeldung: **06.12.2017**
(21) Anmeldenummer: 16172016.4
(22) Anmeldetag: 30.05.2016
(51) Int. Cl.: H04N 7/18, H04N 5/232, G03B 15/00, G05D 1/00

(54) **VERFAHREN UND SYSTEM ZUM AUFZEICHNEN VON VIDEODATEN MIT MINDESTENS EINEM AUF OBJEKTE AUSRICHTBAREN FERNSTEUERBAREN KAMERASYSTEM**

(71) Anmelder: Pfoertzsch, Antony, 28355 Bremen (DE)
(72) Erfinder: Pfoertzsch, Antony, 28355 Bremen (DE)
(74) Vertreter: Eisenführ Speiser

(57) **Zusammenfassung**

Die Erfindung betrifft ein Verfahren zum Aufzeichnen von Videodaten mit mindestens einem auf Objekte ausrichtbaren Kamerasystem (12). Das Verfahren umfasst das Anmelden (62) eines Informationsverarbeitungsgeräts (28, 28a, 28b) an einen Server (22) mit Anmeldedaten (42), das Übertragen (64a, 64b) von Parametern (21) für das Kamerasystem (12) vom Informationsverarbeitungsgerät (28, 28a, 28b) an den Server (22), das Übertragen (66) der Parameter (21) oder der vom Server (22) geänderten Parameter (21) vom Server (22) an das Kamerasystem (12) und das Aufzeichnen (68) von Videodaten durch eine Kamera (14) des Kamerasystems (12) während eines Ausrichtens des Kamerasystems (12) in Abhängigkeit von den Parametern (21).

Ferner betrifft die Erfindung ein System zum Aufzeichnen von Videodaten sowie einen Server (22), ein Kamerasystem (12) und ein Informationsverarbeitungsgerät (28, 28a, 28b) für ein solches System.

## Beschreibung

Die Erfindung betrifft ein Verfahren und ein System zum Aufzeichnen von Videodaten mit einer Kamera eines Kamerasystems, die auf Objekte, insbesondere durch Aktoren des Kamerasystems, die mit der Kamera verbunden sind, ausrichtbar ist.

Aufgrund der immer weiter voranschreitenden Entwicklung im Hinblick auf Kamerasysteme greifen heutzutage viele professionelle Filmer und auch Hobbyfilmer auf komplexe Kamerasysteme zurück, die beispielsweise ferngesteuerte, teilweise autonom agierende, Fahrzeuge, wie zum Beispiel Drohnen, die auch Copter genannt werden, umfassen. Mit derartigen Kamerasystemen lassen sich beispielsweise sportliche Wettkämpfe oder auch akrobatische Darbietungen aus Perspektiven filmen, die mittels einer herkömmlichen, von Hand geführten Kamera nicht möglich sind.

Beispielsweise lassen sich mit Kamerasystemen, die eine Drohne umfassen, Skiwettkämpfe, wie beispielsweise ein Skislalom, filmen und einzelne Personen hierbei mit sehr geringer Distanz verfolgen.

Aufgrund der immer zunehmenderen Verbreitung wird der Einsatz derartiger Kamerasysteme jedoch häufig auf Bereiche begrenzt, sodass keine Gefahr von den Flugdrohnen ausgehen kann. Trotzdem setzen sich jedoch immer wieder Hobby- und professionelle Filmer über die Gebietsbeschränkung hinweg und stellten damit eine Gefahr für die darbietenden Personen sowie weitere Zuschauer dar. Aufgrund der von derartigen Kamerasystemen ausgehenden Gefahr ist daher in vielen öffentlichen und privaten Veranstaltungsbereichen der Einsatz der Systeme verboten.

Gefahren, die von den Kamerasystemen, beispielsweise mit einer Drohne, ausgehen, sind, dass derartige Systeme sichere Bereiche aufgrund von Fehlfunktionen oder beabsichtigt durch den Benutzer verlassen und dadurch Kollisionen entstehen können oder wegen einer Fehlfunktion sogar abstürzen.

Es ist jedoch wünschenswert, auch zukünftig derartige Kamerasysteme verwenden zu können, um die für den Zuschauer besonders interessanten und außergewöhnlichen Videoaufnahmen bereitzustellen, ohne hierbei Zuschauer und auch darbietende Personen, wie Sportler, zu gefährden.

Aufgabe der vorliegenden Erfindung ist es daher, die Nachteile des Standes der Technik weitestgehend auszuräumen. Insbesondere soll eine Möglichkeit geschaffen werden, auf Objekte ausrichtbare Kamerasysteme zur Aufzeichnung von Videodaten zur Verfügung zu stellen, die keine Gefahr für Personen darstellen.

Die Erfindung betrifft daher ein Verfahren und ein System zum Aufzeichnen von Videodaten mit mindestens einem auf Objekte ausrichtbaren Kamerasystem. Hierzu werden zunächst Anmeldedaten von mindestens einem Informationsverarbeitungsgerät, zum Beispiel Mobilgerät, wie Mobiltelefon, Tablet-PC, Computer oder dergleichen, das vorzugsweise internetfähig ist, an einen Server übergeben oder übertragen und dadurch das Informationsverarbeitungsgerät am Server angemeldet. Das heißt, es wird ein Server bereitgestellt, an dem sich ein Benutzer mit einem Informationsverarbeitungsgerät durch Übergeben von Anmeldedaten anmelden kann. Die Anmeldedaten hat ein Benutzer beispielsweise zuvor in dem Informationsverarbeitungsgerät hinterlegen oder kann diese in das Informationsverarbeitungsgerät eingeben. Die Anmeldedaten werden dann vom Informationsverarbeitungsgerät an den Server, vorzugsweise über eine drahtlose Datenverbindung zwischen dem Informationsverarbeitungsgerät und dem Server, übergeben.

Daraufhin werden vorzugsweise Statusinformationen eines oder mehrerer mit dem Server über eine Funkverbindung verbundenen Kamerasysteme an das Informationsverarbeitungsgerät ausgegeben. Derartige Statusinformationen sind beispielsweise Position und Verfügbarkeit des oder der Kamerasysteme.

Gemäß der Erfindung lassen sich dann Parameter, beispielsweise für eine Steuerung des Kamerasystems, von einem Benutzer auswählen oder angeben. Die Parameter für eine Steuerung des Kamerasystems werden vom Informationsverarbeitungsgerät an den Server übertragen. Nachdem der Server die Parameter für die Steuerung des Kamerasystems empfangen hat, überträgt der Server die Parameter oder vom Server für die Steuerung geänderte Parameter an das Kamerasystem. Derartige Parameter sind beispielsweise das Auswählen eines Objekts, auf das sich die Kamera ausrichten soll, bestimmte Positionen, die das Kamerasystem einnehmen soll und/oder weiterführende Funktionen, die das Kamerasystem ausführen soll. Dabei sind Parameter direkte Steuerparameter, die auch Steuerbefehle genannt werden können und direkt vom Kamerasystem ausgeführt werden sollen, oder indirekte Steuerparameter, die Vorgaben für ein Verhalten des Kamerasystems umfassen, wobei das Kamerasystem durch eigene Sensoren im Wesentlichen autonom, aber unter Berücksichtigung der indirekten Steuerparameter agiert.

Ferner werden Videodaten mit dem Kamerasystem aufgezeichnet, während sich die Kamera des Kamerasystems in Abhängigkeit von den Parametern oder den vom Server für die Steuerung geänderten Parametern auf das Objekt ausrichtet.

Dank der Erfindung ist es also möglich, Videoaufzeichnungen mit Kamerasystemen auszuführen, die beispielsweise von einem Betreiber einer Sportveranstaltung zur Verfügung gestellt werden. Diese Kamerasysteme empfangen Parameter insbesondere für ihre Ausrichtung von dem Server und nicht direkt von einem Bedienereingabegerät, wie einer gewöhnlichen Fernsteuerung.

Daher kann der Bediener zwar mit einem Informationsverarbeitungsgerät über den Umweg des Servers auf die Steuerung des Kamerasystems einwirken, wobei vom Veranstalter feste Grenzen über den Server, beispielsweise im Hinblick auf Bereichsbeschränkungen für das Kamerasystem, vorgegeben werden können. Diese Vorgaben können nicht von einem Benutzer umgangen werden.

Demnach kann der Betrieb von privaten Kamerasystemen, die beispielsweise nicht vom Veranstalter stammen, untersagt werden und der Veranstalter selbst trägt Sorge dafür, dass nur vorschriftsmäßig gewartete und daher fehlerfrei funktionierende Kamerasysteme eingesetzt werden, wodurch die Gefahr eines Unfalls weiter reduziert wird. Außerdem kann der Veranstalter durch Festlegen von Bereichsbeschränkungen des Kamerasystems verhindern, dass diese in Gefahrenzonen eintreten.

Gemäß einer ersten Ausführungsform der Erfindung wird mit den Anmeldedaten, die beispielsweise einen Benutzernamen und ein Passwort umfassen, gleichzeitig oder zeitlich danach auch eine Aufzeichnungsdauer oder ein Aufzeichnungszeitraum von dem Informationsverarbeitungsgerät an den Server übergeben oder übertragen. Das heißt, ein Benutzer kann eine gewünschte Aufzeichnungsdauer oder einen Aufzeichnungszeitraum beispielsweise mit Eingabemitteln des Informationsverarbeitungsgeräts eingeben und diese werden dann an den Server übergeben. Daraufhin wird dann vom Server an das Informationsverarbeitungsgerät ein Zeitpunkt für eine Verfügbarkeit oder eine Zeitdauer bis zu einer Verfügbarkeit ausgegeben. Hierbei ist der Zeitpunkt oder die Zeitdauer abhängig von Statusinformationen des Kamerasystems, von einer oder mehreren zuvor übertragenen Aufzeichnungsdauern oder Aufzeichnungszeiträumen und von der aktuell übertragenen Aufzeichnungsdauer oder dem aktuell übertragenen Aufzeichnungszeitraum.

Dadurch lassen sich beispielsweise von einem privaten Benutzer, der sich beispielsweise selbst beim Durchfahren eines Skigebiets, in dem das System zur Verfügung steht, filmen lassen möchte, gewünschte Zeiten für die Videoaufnahme planen. Ist beispielsweise das fernsteuerbare Kamerasystem noch durch einen vorherigen Benutzer belegt, so verschiebt sich der gewünschte Aufnahmezeitpunkt und der Zeitpunkt, zu dem die Aufnahme beginnen kann, wird vom Server bestimmt und dem Benutzer durch Übertragen des Zeitpunkts an das Informationsverarbeitungsgerät mitgeteilt. Dadurch lässt sich vom "neuen" Benutzer schon abschätzen, wann die Aufzeichnung von Videodaten für ihn selbst beginnen wird. Das Angeben der gewünschten Aufzeichnungsdauer dient also, um auch nachfolgenden Benutzern die Möglichkeit der Planung eines Zeitpunkts der Aufzeichnung zu geben.

Gemäß einer weiteren Ausführungsform werden die aufgezeichneten Videodaten während der Aufnahme kontinuierlich und/oder nach Beendigung einer Aufnahme von der Kamera an den Server und vom Server an ein vorbestimmtes Ziel übertragen. Ein vorbestimmtes Ziel kann beispielsweise ein mit dem Server über eine Internetverbindung verbundener Computer oder ein mit dem Server über eine Daten- und/oder Videoverbindung verbundenes Gerät sein. Alternativ oder zusätzlich werden die Videodaten während der Aufnahme kontinuierlich und/oder nach Beendigung einer Aufnahme insgesamt an das Informationsverarbeitungsgerät direkt von dem Kamerasystem oder dem Server übertragen.

Beispielsweise kann der Benutzer über das Informationsverarbeitungsgerät ein vorbestimmtes Ziel, wie ein soziales Netzwerk, eine Videoplattform oder eine E-Mailadresse, angeben und sich dann beispielsweise während der Durchfahrt durch ein Skigebiet filmen lassen. Am Ende des Zeitraums der Aufzeichnung, der zuvor vom Server ermittelt wurde, werden die Videodaten dann vom Server direkt an das vorbestimmte Ziel übertragen und der Benutzer kann das den Videodaten entsprechende Video beispielsweise vor dem heimischen Computer betrachten. Alternativ ist es auch möglich, dass die Videodaten direkt während der Aufzeichnung an weitere Zuschauer, die eine Echtzeitverfolgung der Aufzeichnung wünschen, übertragen werden.

Gemäß einer weiteren Ausführungsform werden mit dem Kamerasystem gleichzeitig Positionen des oder der Objekte in Bildausschnitten aufgezeichnet. Diese können später für die weitere Verarbeitung der Videodaten von einem Benutzer verwendet werden und hierzu gleichzeitig mit den Videodaten einem Benutzer zur Verfügung gestellt werden.

Gemäß einer weiteren Ausführungsform ist das Kamerasystem umpositionierbar, wobei ein oder mehrere Sektoren für das Kamerasystem festgelegt sind. Die Parameter, die vom Informationsverarbeitungsgerät an den Server übertragen wurden, umfassen Angaben für einen oder mehrere der Sektoren, in die das Kamerasystem in einer vorgegebenen Reihenfolge einfach oder wiederholt umpositioniert wird oder der oder die die Umpositionierung des Kamerasystems beschränken.

Sektoren, die auch als Bereiche bezeichnet werden können, sind insbesondere geographisch beschränkte Bereiche, die beispielsweise durch Koordinaten festgelegt sind. Dabei ist ein Sektor denkbar, in dem das Kamerasystem umpositionierbar ist, oder es sind mehrere einzelne, vorzugsweise benachbarte, Sektoren denkbar, die die Umpositionierung der Kamera beschränken.

Die Sektoren sind beispielsweise, um wieder auf das bereits genannte Beispiel des Skigebiets zurückzugreifen, Seitenbereiche außerhalb einer befahrbaren Skifläche. Außerdem sind die Sektoren beispielsweise derart gewählt, dass diese nicht in einen Bereich hineinragen, in dem sich Zuschauer aufhalten können. Im Falle mehrerer eingesetzter Kamerasysteme ist vorzugsweise auch vorgesehen, dass in jedem von mehreren sich nicht überschneidenden Sektoren jeweils nur ein Kamerasystem eingesetzt wird, sodass umpositionierbare Kameras auf die ihnen zugewiesenen Sektoren beschränkt sind und daher die Gefahr einer Kollision vermindert wird.

Gemäß einer weiteren Ausführungsform umfasst das Kamerasystem ein unbemanntes Fahrzeug, insbesondere ein Luft- und/oder Landfahrzeug, wie ein unbemanntes Flugobjekt, insbesondere eine Drohne, wie einen Copter, insbesondere einen Quadrocopter oder einen Octocopter, zum Umpositionieren des Kamerasystems. Unbemannte Fahrzeuge ermöglichen eine besonders flexible Umpositionierung der Kamera eines Kamerasystems.

Gemäß einer weiteren Ausführungsform umfassen die Parameter, die vom Informationsverarbeitungsgerät an den Server und vom Server an das Kamerasystem übertragen werden, einen sicheren Flug- oder Fahrbereich, der einem vordefinierten Teilbereich eines oder mehrerer der Sektoren entspricht, und zusätzlich oder alternativ einen Startsektor des unbemannten Fahrzeugs. Der Startsektor kann dabei zum Beispiel einer von mehreren durch den Server vorgegebenen Sektoren sein. In Abhängigkeit von den Parametern erfolgt dann ein Umpositionieren des Kamerasystems durch Abfliegen oder Abfahren des Flug- oder Fahrbereichs oder das Anfliegen oder Anfahren des Startsektors.

Das heißt, ein Benutzer kann über das Informationsverarbeitungsgerät einen Flug- oder Fahrbereich durch Parameter vorgeben, die das unbemannte Fahrzeug dann durchfliegt oder durchfährt während es eine Aufnahme mit der Kamera ausführt. Alternativ oder zusätzlich ist ein Startsektor durch Parameter vorgebbar, der vom Fahrzeug vor dem Beginn der Videoaufzeichnung angeflogen wird.

Demnach ist eine, bis auf die Sektoren oder Bereiche beschränkte, flexible Route oder Startposition von einem Benutzer frei wählbar.

Gemäß einer weiteren Ausführungsform beginnt das unbemannte Fahrzeug nach Erreichen eines Startsektors die Aufnahme der Videodaten erst nachdem das unbemannte Fahrzeug ein Startsignal empfängt. Dieses Startsignal wird entweder vom Server gesendet und vom Kamerasystem empfangen. Alternativ kann das Startsystem von dem mobilen Gerät gesendet und direkt an das Kamerasystem gesendet werden. Gemäß einer bevorzugten Alternativen weist das Kamerasystem mindestens einen Sensor auf, wobei vorgegebene Sensorsignale des Sensors als Startsignal ausgewertet werden.

Demnach kann ein Benutzer das Flugobjekt an einem Startsektor positionieren und durch Erzeugen eines Startsignals die Videozeichnung erst in dem Moment beginnen, in dem beispielsweise ein interessierendes Objekt in dem Sektor erscheint.

Gemäß einer weiteren Ausführungsform ist der Sensor ein Mikrofon und die vorgegebenen Sensorsignale sind vorgegebene in Signale umgewandelte Geräusche. Alternativ oder zusätzlich ist der Sensor ein bildgebender Sensor, zum Beispiel ein Infrarotsensor oder ein Videosensor. Die vorgegebenen Sensorsignale entsprechen dann vorgegebenen in Signale umgewandelten Gesten oder Bewegungen einer Person oder eines Objekts. Hierdurch ist ein Start der Videoaufzeichnung ohne weitere Geräte, wie beispielsweise das Informationsverarbeitungsgerät, möglich.

Es ist beispielsweise möglich, das vorgegebene Sensorsignal im Falle eines Sensors, der ein Mikrofon ist, als das Geräusch eines Verbrennungsmotors eines Fahrzeugs vorzugeben. Im Falle, dass beispielsweise ein Autorennen aufgezeichnet werden soll, ist daher das Kamerasystem in einem Startsektor positionierbar und beginnt automatisch mit der Videoaufnahme, sobald sich ein Fahrzeug diesem Bereich nähert.

Vorteilhaft ist das Starten der Videoaufzeichnung auch für Personen, die sich selbst filmen wollen und aufgrund der Betätigung eines Sportgeräts keine freie Hand für die Bedienung des Informationsverarbeitungsgeräts haben, um das Startsignal zu erzeugen. Hier kann dem Kamerasystem das Startsignal über eine Geste mitgeteilt werden.

Gemäß einer weiteren Ausführungsform umfassen die Parameter, die vom Informationsverarbeitungsgerät an den Server und vom Server an das Kamerasystem übertragen werden, einen vorgegebenen Flug- oder Fahrstil, wobei das Fahrzeug während der Aufzeichnung den vorgegebenen Flug- oder Fahrstil ausführt. Demnach ist es beispielsweise - um die Videoaufzeichnung für verschiedene Anwendungsfälle interessanter zu gestalten - wünschenswert, dass sich das Kamerasystem innerhalb eines ausgewählten Sektors in einem Zickzack-Muster oder in einer anderen Art eine eigene Bewegung, die unabhängig von einem zu filmenden Objekt ist, bewegt.

Gemäß einer weiteren Ausführungsform umfassen die Parameter, die vom Informationsverarbeitungsgerät an den Server und vom Server an das Kamerasystem übertragen werden, ein vorbestimmtes Objekt, wobei das Fahrzeug während des Flugs oder der Fahrt das vorbestimmte Objekt verfolgt und hierbei die Kamera zumindest überwiegend auf das ausgewählte Objekt ausrichtet. Das Objekt wird beispielsweise bereits während anhand einer auf das Informationsverarbeitungsgerät übertragenen Videoaufnahme des Kamerasystems mit dem Informationsverarbeitungsgerät ausgewählt und somit vorbestimmt.

Hierdurch muss nicht ein gesamter Sektor von der Kamera des Kamerasystems aufgezeichnet werden, sondern es kann ein interessierendes Objekt, das vorbestimmt wird, in vergrößerter Darstellung verfolgt und die Bewegung im Detail aufgezeichnet werden.

Gemäß einer weiteren Ausführungsform wird das vorbestimmte Objekt verfolgt, indem bei der Anmeldung Positionsidentifikationsdaten des oder eines weiteren Informationsverarbeitungsgeräts an den Server und/oder das Flugobjekt übergeben werden und das Flugobjekt während des Flugs direkt oder über den Server die Positionsidentifikationsdaten des oder des weiteren Informationsverarbeitungsgeräts empfängt und die Positionen, die jeweils identifiziert werden, zur Ausrichtung der Kamera verwendet werden. Positionsidentifikationsdaten sind beispielsweise GPS-Positionsdaten eines GPS-Empfängers des Informationsverarbeitungsgeräts oder des weiteren Informationsverarbeitungsgeräts.

Alternativ oder zusätzlich wird das ausgewählte Objekt verfolgt, indem Referenzdaten eines zu verfolgenden Objekts mit den Parametern, die vom Informationsverarbeitungsgerät an den Server und vom Server an das Kamerasystem übertragen werden, übergeben werden und die Referenzdaten mit den Sensordaten eines bildgebenden Sensors, zum Beispiel eines Infrarotsensors oder eines Videosensors, des Kamerasystems verglichen werden, um das ausgewählte Objekt zu erkennen und zu verfolgen.

Beispielsweise wird also das Informationsverarbeitungsgerät, mit dem die Anmeldung erfolgte, oder ein weiteres Informationsverarbeitungsgerät, das einen GPS-Empfänger umfasst, als Objekt vorbestimmt und mit dem Server oder dem Flugobjekt verbunden, sodass die GPS-Position des mobilen Geräts, das zum Beispiel ein Mobiltelefon oder eine Smartwatch ist, direkt an den Server oder das Kamerasystem übertragen wird. In Abhängigkeit der eigenen Position des Kamerasystems, das vorzugsweise ebenfalls einen GPS-Empfänger aufweist, kann nun die Kamera immer auf die Position des weiteren Informationsverarbeitungsgeräts ausgerichtet werden. Somit ist kein Eingriff eines Benutzers in die Steuerung während der Videoaufzeichnung nötig, solange das Informationsverarbeitungsgerät die Positionsdaten oder Positionsidentifikationsdaten überträgt.

Ferner betrifft die Erfindung ein System zum Ausführen der Erfindung gemäß einer der vorgenannten Ausführungsformen. Außerdem betrifft die Erfindung ein Kamerasystem für das System. Weiter betrifft die Erfindung einen Server für das System. Zudem betrifft die Erfindung ein Informationsverarbeitungsgerät für das System.

Weitere Ausführungsformen ergeben sich anhand der in den Figuren näher beschriebenen Ausführungsbeispiele. Hierbei zeigen:
- Fig. 1: ein Ausführungsbeispiel des erfindungsgemäßen Systems,
- Fig. 2: ein Ausführungsbeispiel eines Informationsverarbeitungsgeräts,
- Fig. 3: ein weiteres Ausführungsbeispiel eines Informationsverarbeitungsgeräts,
- Fig. 4: das Informationsverarbeitungsgerät aus Fig. 3 in einer Rückansicht,
- Fig. 5: eine vergrößerte Darstellung des Kamerasystems aus Fig. 1 in Bodenposition,
- Fig. 6: das Kamerasystem aus Fig. 5 im Flug,
- Fig. 7: ein alternatives Ausführungsbeispiel des Kamerasystems mit einem unbemannten Landfahrzeug,
- Fig. 8: ein weiteres alternatives Ausführungsbeispiel des Kamerasystems mit einem unbemannten Drahtseilfahrzeug,
- Fig. 9: Schritte eines Ausführungsbeispiels des Verfahrens,
- Fig. 10 bis Fig. 13: weitere Schritte eines Ausführungsbeispiels des Verfahrens,
- Fig. 14: eine Draufsicht auf ein Kamerasystem, das eine Videoaufnahme ausführt,
- Fig. 15: eine weitere Draufsicht auf ein Kamerasystem, das eine Videoaufnahme ausführt und
- Fig. 16: ein Kamerasystem, das durch eine Geste gesteuert wird.

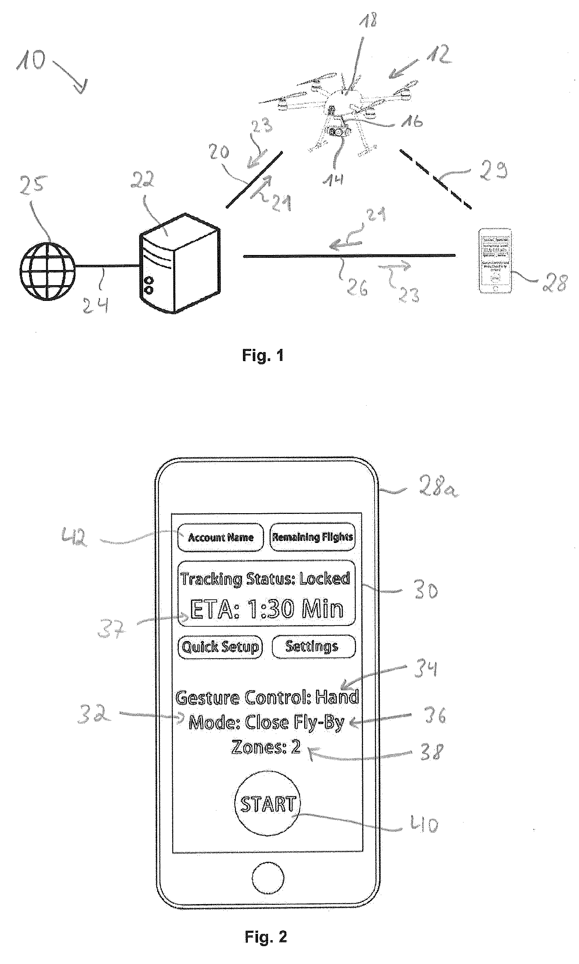

Fig. 1 zeigt ein Ausführungsbeispiel des erfindungsgemäßen Systems 10. Das System 10 umfasst ein Kamerasystem 12, das eine Kamera 14 umfasst, die über einen oder mehrere Aktoren 16 mit einem unbemannten Flugobjekt 18 verbunden ist. Das unbemannte Flugobjekt 18 wird gemäß einer besonderen Ausführungsform später im Detail erklärt.

Das Kamerasystem 12 ist über eine Datenverbindung 20, die vorzugsweise eine Funkverbindung ist, die beispielsweise eine Mobilfunkverbindung ist, mit einem Server 22 verbunden. Der Server 22 kann über die Datenverbindung 20 Daten mit dem Kamerasystem 12 austauschen. Beispielsweise kann der Server 22 Parameter 21 an das Kamerasystem 12 senden und Statusinformationen 32 vom Kamerasystem 12 abrufen. Ferner sind Videodaten, die mit der Kamera 14 aufgezeichnet werden, über die Datenverbindung 20 an den Server 22 übertragbar.

Außerdem ist der Server 22 über eine weitere Datenverbindung 24 mit dem Internet 25 verbunden. Die Internetverbindung des Servers 22 dient beispielsweise, um Videodaten, die mit der Kamera 14 empfangen und über die Datenverbindung 20 vom Kamerasystem 12 zum Server 22 übertragen wurden, an ein vorbestimmtes Ziel im Internet, wie zum Beispiel ein soziales Netzwerk, eine Videoplattform oder eine E-Mailadresse, zu übertragen.

Zudem ist der Server 22 über eine Datenverbindung 26, die ebenfalls eine Funkverbindung, beispielsweise eine Mobilfunkverbindung, ist, mit einem Informationsverarbeitungsgerät 28 verbunden. Parameter 21 für das Kamerasystem 12 können demnach vom Informationsverarbeitungsgerät 28 über die Datenverbindung 26 an den Server 22 gesendet werden und vom Server 22 über die Datenverbindung 20 an das Kamerasystem 12. Außerdem lassen sich mit der Datenverbindung 26 zwischen dem Server 22 und dem Informationsverarbeitungsgerät 28 Statusinformationen des Kamerasystems 12, die zuvor über die Datenverbindung 20 zum Server 22 übertragen wurden, an das Informationsverarbeitungsgerät 28 senden.

Eine optionale weitere Datenverbindung 29 dient zur Übertragung zwischen dem Kamerasystem 12 und dem Informationsverarbeitungsgerät 28 direkt. Die Datenverbindung 29 zwischen dem Kamerasystem 12 und dem Informationsverarbeitungsgerät 28 dient beispielsweise zum Übertragen eines GPS-Signals oder eines vergleichbaren Positionssignals des Informationsverarbeitungsgeräts 28, das auch Positionsidentifikationssignal genannt werden kann und Positionsidentifikationsdaten umfasst, an das Kamerasystem 12, um dem Kamerasystem 12 die Position des Informationsverarbeitungsgeräts 28 mitzuteilen. Gemäß dem dargestellten Ausführungsbeispiel ist die Datenverbindung 29 strichliert dargestellt, um auszudrücken, dass diese optional ist. Alternativ können zum Beispiel Positionsdaten des soeben genannten Positionssignals auch vom Informationsverarbeitungsgerät 28 über die Datenverbindung 26 an den Server 22 und vom Server 22 über die Datenverbindung 20 an das Kamerasystem 12 übertragen werden.

Fig. 2 zeigt ein Ausführungsbeispiel eines Informationsverarbeitungsgeräts 28a gemäß einem Ausführungsbeispiel. Das Informationsverarbeitungsgerät 28a ist im System 10, das in Fig. 1 dargestellt ist, einsetzbar. Das Informationsverarbeitungsgerät 28a weist eine Anzeige 30 auf, mit der Statusinformationen 32 des Flugobjekts 18, die vom Server 22 empfangen wurden, dargestellt werden. Die Statusinformationen 32 umfassen zum Beispiel den zurzeit eingestellten Steuerungsmodus 34 eines Kamerasystems 12, einen Aufnahmemodus 36 eines Kamerasystems 12 oder eine Sektoranzeige 38, die einen oder mehrere Bereiche oder Sektoren anzeigt, innerhalb derer das Kamerasystem 12 umpositionierbar und ausrichtbar ist. Neben den Statusinformationen 32 wird über die Anzeige 30, die vorzugsweise berührungsempfindlich ist, ein Startbutton 40 zur Verfügung gestellt. Mit dem Startbutton 40 ist ein Startsignal vom Informationsverarbeitungsgerät 28a an den Server 22 über die Datenverbindung 26 ausgebbar, um entweder das Kamerasystem 12 an eine vorgegebene Startposition zu lenken oder um die Aufnahme von Videodaten mit der Kamera 14 zu starten. Außerdem wird ein Zeitpunkt 37 angezeigt, ab dem die Videoaufnahme beginnen kann.

Ferner sind mit der Anzeige 30 Anmeldedaten 42 dargestellt, die beispielsweise im Informationsverarbeitungsgerät 28a hinterlegt sind und durch Auswahl über die Datenverbindung 26 an den Server 22 übertragen werden, um das Informationsverarbeitungsgerät 28a am Server 22 anzumelden. Erst nach Anmeldung ist ein Zugriff auf den Server 22 sowie auf ein oder mehrere mit dem Server 22 verbundene Kamerasysteme 12 möglich. Das Informationsverarbeitungsgerät 28a in Fig. 2 entspricht einem mobilen Telefon.

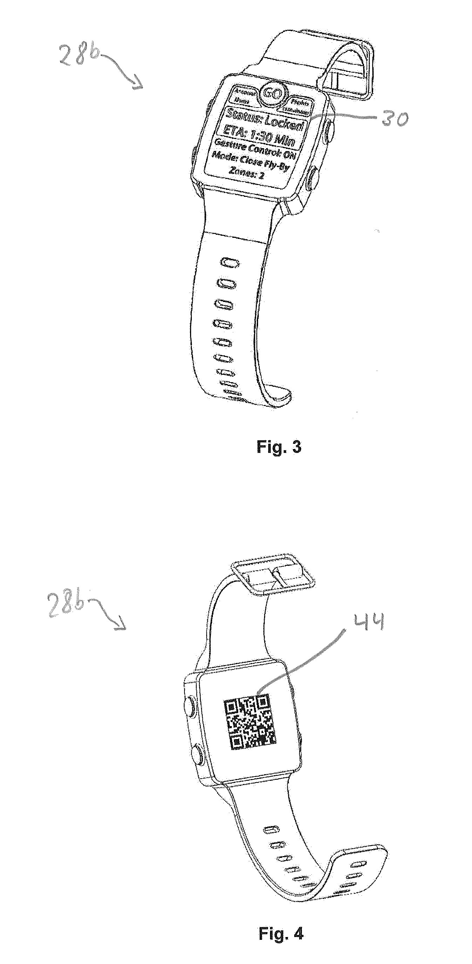

Alternativ oder zusätzlich ist auch ein Informationsverarbeitungsgerät gemäß einer anderen Ausführungsform, nämlich in Form einer intelligenten Uhr, die auch Smartwatch genannt wird, möglich. Ein derartiges Informationsverarbeitungsgerät 28b ist in der Fig. 3 dargestellt. Ebenfalls verfügt das Informationsverarbeitungsgerät 28b, das in Fig. 3 dargestellt ist, über eine Anzeige 30, auf der die identischen Informationen wie zuvor auf dem Informationsverarbeitungsgerät 28a, wie es in Fig. 2 dargestellt ist, darstellbar sind.

Das Informationsverarbeitungsgerät 28b in Fig. 3 weist einen nicht dargestellten GPS-Empfänger auf und ist eingerichtet, dieses GPS-Signal über eine Antenne als Funksignal beispielsweise an das Kamerasystem 12 und/oder den Server 22 zu übertragen.

In Fig. 4 ist nun das Informationsverarbeitungsgerät 28b, das in Fig. 3 dargestellt ist und hier einer Smartwatch entspricht, von der Rückseite dargestellt. Auf der Rückseite weist das Informationsverarbeitungsgerät 28b einen scanbaren Code 44 auf. Gemäß diesem Ausführungsbeispiel ist das Informationsverarbeitungsgerät 28b ständig eingerichtet, um ein GPS-Signal oder ein vergleichbares Positionssignal an das Kamerasystem 12 zu übertragen. Das Kamerasystem 12 ist dann so eingerichtet, um die Kamera 14 durch Umpositionieren des Kamerasystems 12 mittels dem unbemannten Flugobjekt 18 und durch Ausrichten der Kamera 14 mit den Aktoren 16 so zu steuern, dass die Position des Informationsverarbeitungsgeräts 28b immer im Wesentlichen im Fokus der Kamera 14 des Kamerasystems 12 ist. Das heißt, das Kamerasystem 12 verfolgt das Informationsverarbeitungsgerät 28b.

Um ein Startsignal zu erzeugen, ab dem die Verfolgung beginnen soll, kann gemäß einer Ausführungsform der scanbare Code 44 zuvor von einem Informationsverarbeitungsgerät 28a, wie beispielsweise in Fig. 2 dargestellt, eingescannt werden und zusammen mit Anmeldedaten 42 an den Server 22 übertragen werden. Hierdurch wird die Verfolgung des Informationsverarbeitungsgeräts 28b initialisiert. Demnach sind also, obwohl in Fig. 1 nur ein Informationsverarbeitungsgerät 28 dargestellt ist, mehrere Informationsverarbeitungsgeräte 28a, 28b, insbesondere gemäß verschiedenen Ausführungsformen, nämlich einerseits als Mobiltelefon 28a und andererseits als Smartwatch 28b, innerhalb des Systems 10 von einem Benutzer einsetzbar. Das Mobiltelefon 28a dient als beispielsweise zur Anmeldung, zur Übergabe von Parametern 21 und zum Abruf von Statusinformationen 32, und die Smartwatch 28b dient zum Bereitstellen des Positionssignals.

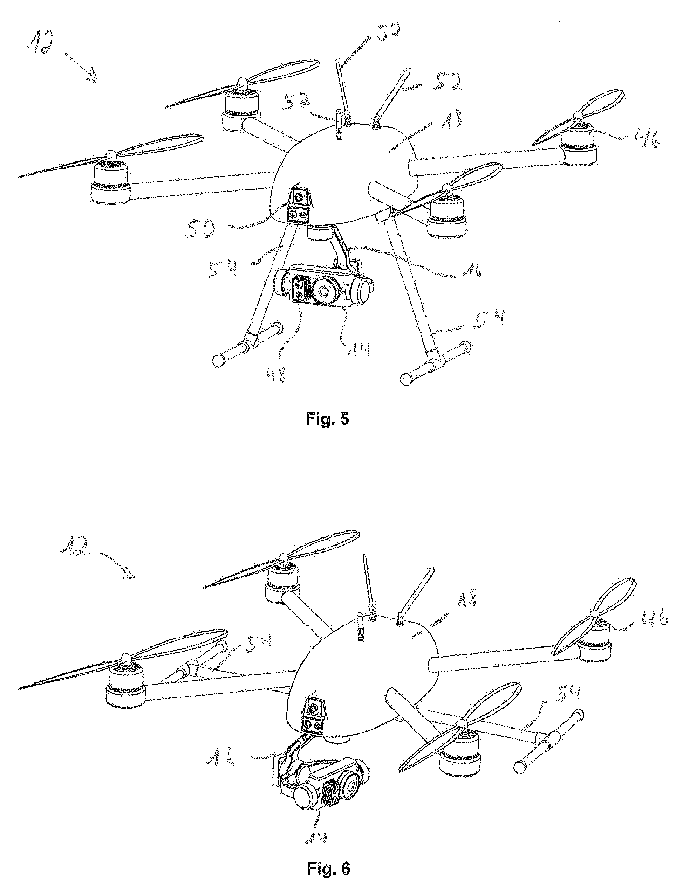

Fig. 5 zeigt eine vergrößerte Darstellung des Kamerasystems 12, wie es in Fig. 1 dargestellt ist. Das Kamerasystem 12 umfasst eine Kamera 14, die über Aktoren 16 mit einem unbemannten Flugobjekt 18, das hier einem Quadrocopter entspricht, verbunden ist. Der Quadrocopter 18 weist vier Rotoren 46 auf, um die Kamera 14 umzupositionieren. Mit den Aktoren 16 sowie den Rotoren 46 ist eine Ausrichtung der Kamera 14 auf ausgewählte Objekte möglich.

Zusätzlich weist die Kamera 14 Sensoren 48, zum Beispiel optische Sensoren oder Tiefensensoren, des Kamerasystems 12 auf, die einerseits dienen, um das Kameraobjektiv zu fokussieren und andererseits, um eine Ausrichtung der Kamera 14 mit den Aktoren 16, die in Abhängigkeit der Sensoren 48 steuerbar sind, zu ermöglichen. Demnach dienen die Sensoren 48 beispielsweise, um ein Objekt zu erkennen und die Aktoren 16 derart zu steuern, dass das Objektiv der Kamera 14 immer auf das Objekt, das erkannt werden soll, gerichtet ist. Somit ist also auch unabhängig oder alternativ zu einem Verfolgen eines mobilen Geräts 28b, wie es beispielsweise in den Fig. 3, 4 dargestellt ist, durch das Objektiv der Kamera 14, die immer auf die Positionsdaten des mobilen Geräts 28b ausgerichtet wird, eine Ausrichtung in Abhängigkeit eines erkannten Objekts durch die Sensoren 48 anzupassen.

Weitere Sensoren 50, zum Beispiel optische Sensoren oder Tiefensensoren, sind beispielsweise direkt am Flugobjekt 18 des Kamerasystems 12 angeordnet, um ebenfalls ein zu verfolgendes Objekt durch Umpositionieren, also durch Fliegen von einem Punkt zu einem weiteren Punkt, zu verfolgen, indem diese Sensoren 50 die Steuerung der Rotoren 46 steuern. Die Sensoren 50 des Flugobjekts 18 dienen außerdem, um eine Kollision des Flugobjekts 18 mit Hindernissen, wie weiteren Kamerasystemen 12, zu vermeiden. Ferner dienen die Sensoren 50 vorzugsweise auch oder alternativ zum optischen Navigieren, das auch optische Odometrie oder SLAM-Verfahren genannt wird. Hierfür sind gemäß einem hier nicht dargestellten, aber umfassten, Ausführungsbeispiel noch weitere Sensoren, die beispielsweise mit dem Server 22 verbunden sind und die Sensordaten zur Positionsbestimmung des Kamerasystems 12 an den Server 22 senden, vorgesehen. Die weiteren Sensoren sind externe Sensoren, die beispielsweise im Randbereich des oder der Sektoren angeordnet sind. Außerdem sind mehrere Antennen 52 dargestellt, um die verschiedenen Datenverbindungen 20, 29 mit dem Server 22 und dem Informationsverarbeitungsgerät 28 zu realisieren. Außerdem dienen die Antennen 52 zum Empfangen von Positionsdaten, beispielsweise eines GPS-Systems, um die Position des Kamerasystems 12 selbst festzustellen.

Zum sicheren Landen weist das Kamerasystem 12 Standfüße 54 auf. Diese können während des Flugs des Kamerasystems 12 hochgeklappt werden, um eine freie Schwenkbarkeit der Kamera 14 mittels der Aktoren 16 in alle Richtungen zu gewährleisten. Dies ist beispielsweise in Fig. 6 dargestellt.

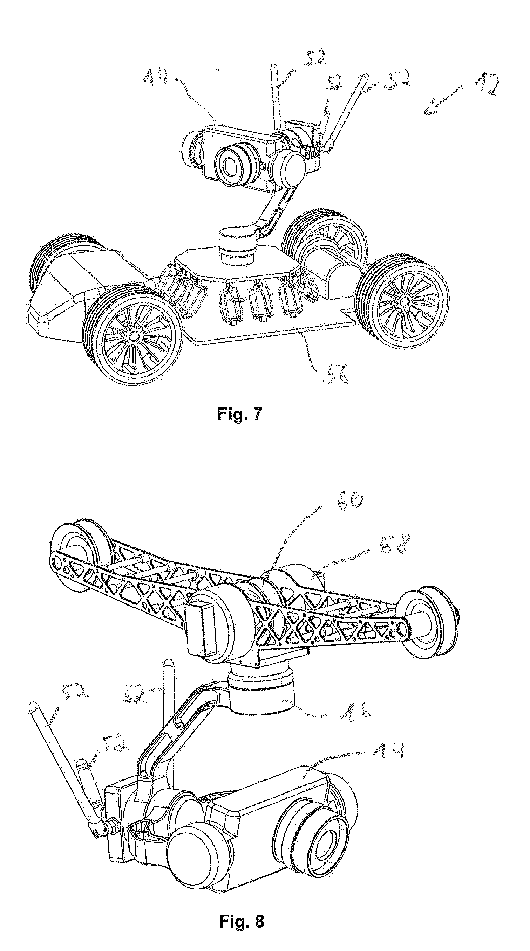

Fig. 7 zeigt ein alternatives Ausführungsbeispiel eines Kamerasystems 12, das statt eines unbemannten Flugobjekts ein unbemanntes Landfahrzeug 56 aufweist. Auch das Landfahrzeug 56 weist Antennen 52 auf, mit denen die zuvor genannten Datenverbindungen 20, 29 herstellbar sind. Zur besseren Übersicht sind Sensoren 48, 50 in Fig. 7 nicht weiter dargestellt, wobei diese ebenfalls Bestandteil des Kamerasystems 12 sind.

Eine weitere Alternative eines Kamerasystems 12 ist in Fig. 8 dargestellt. Das Kamerasystem 12 in Fig. 8 ist ein unbemanntes Drahtseilfahrzeug 58, das an einem Drahtseil befestigbar und an diesem Drahtseil auf- und abfahrbar ist. Ebenfalls ist das unbemannte Drahtseilfahrzeug 58 mit einem Antrieb 60 ausgestattet, der die Bewegung des Fahrzeugs 58 koordiniert. Wieder sind am Fahrzeug die Kamera 14 und die Aktoren 16 vorgesehen, die eine Ausrichtung der Kamera 14 ermöglichen.

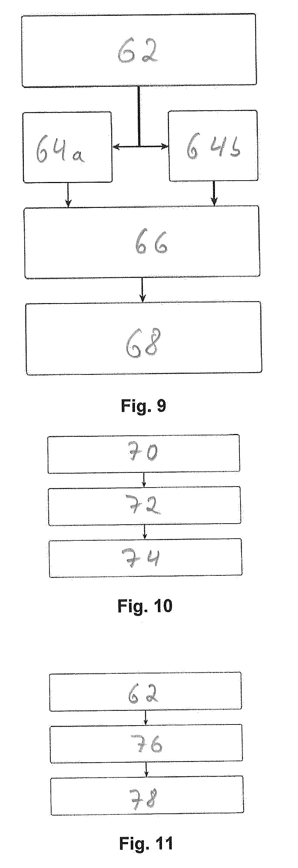

Fig. 9 zeigt einen Überblick über die Schritte eines Ausführungsbeispiels des erfindungsgemäßen Verfahrens. In einem ersten Schritt erfolgt ein Anmelden 62 eines Informationsverarbeitungsgeräts 28a, 28b, insbesondere durch Übertragen von Anmeldedaten 42. Daraufhin werden Parameter 21 für eine Steuerung des Kamerasystems 12 vom Informationsverarbeitungsgerät 28a, 28b an den Server 22 übertragen 64a, 64b. Hierbei werden entweder vorgegebene Parameter 21, die vom Server 22 zur Auswahl mit dem Informationsverarbeitungsgerät 28a, 28b bereitgestellt werden, übertragen 64a oder es werden von einem Benutzer benutzerspezifische Parameter 21 übertragen 64b. Daraufhin werden die Parameter 21 oder vom Server 22 geänderte Parameter 21 an das Kamerasystem 12 übertragen 66. Nach dem Übertragen 66 der Parameter 21 vom Server 22 an das Kamerasystem 12 beginnt das Kamerasystem 12 mit der Aufzeichnung 68, wobei eine Ausrichtung der Kamera 14 und ein Positionieren oder Umpositionieren des Kamerasystems 12 in Abhängigkeit der Parameter 21 oder geänderten Parameter 21 erfolgt.

In Fig. 10 werden weitere Schritte eines Ausführungsbeispiels des Verfahrens dargestellt. Die bei der Aufzeichnung 68 aufgenommenen Videodaten werden im Schritt 70 in Echtzeit oder nach Beendigung einer Videoaufzeichnung an den Server 22 gesendet. Schritt 72 betrifft dann den Fall, dass mit dem Server 22 mehrere Kamerasysteme 12 mit einem oder mehreren Informationsverarbeitungsgeräten 28 unterschiedlicher Benutzer verbunden sind, und jedes Informationsverarbeitungsgerät 28 einer oder mehreren Kamerasystem 12 zugeordnet ist. In diesem Schritt weist der Server 22 die Videoabschnitte oder Videodaten, die mit den jeweiligen Kamerasystemen 12 aufgenommen wurden, den entsprechenden Informationsverarbeitungsgeräten 28 oder den für die Mobildaten 28 hinterlegten Zielen für die Videodaten zu.Hierzu werden die Anmeldedaten sowie Identifikationsdaten der Kamerasysteme 12 verwendet. Nach der Zuweisung 72 werden dann in einem nächsten Schritt 74 die Videodaten an die entsprechenden Informationsverarbeitungsgeräte 28 oder Ziele übertragen.

Fig. 11 zeigt ein weiteres Ausführungsbeispiel des Verfahrens, wobei nun bei der Anmeldung 62 neben Anmeldedaten 42 auch eine von einem Benutzer eingegebene gewünschte Aufzeichnungsdauer oder ein von einem Benutzer gewünschter Aufzeichnungszeitraum vom Informationsverarbeitungsgerät 28 an den Server 22 übertragen wird.

Im darauffolgenden Schritt 76 erhält der Server 22 die Aufzeichnungsanfrage und plant auf Basis von Anfragen und Auslastung des oder der Kamerasysteme 12 einen Zeitpunkt oder einen Zeitraum bis zur Verfügbarkeit des einen, mehrerer oder aller Kamerasysteme 12. Im Schritt 78 wird dann der Zeitpunkt oder die Zeitdauer bis zu einer Verfügbarkeit des Kamerasystems 12 oder mehrerer Kamerasysteme 12 an das Informationsverarbeitungsgerät 28 ausgegeben. Die Schritte 76 und 78 werden beispielsweise gemäß dem Verfahren, das im Hinblick auf Fig. 9 beschrieben wurde, vor den Schritten 64a, 64b ausgeführt.

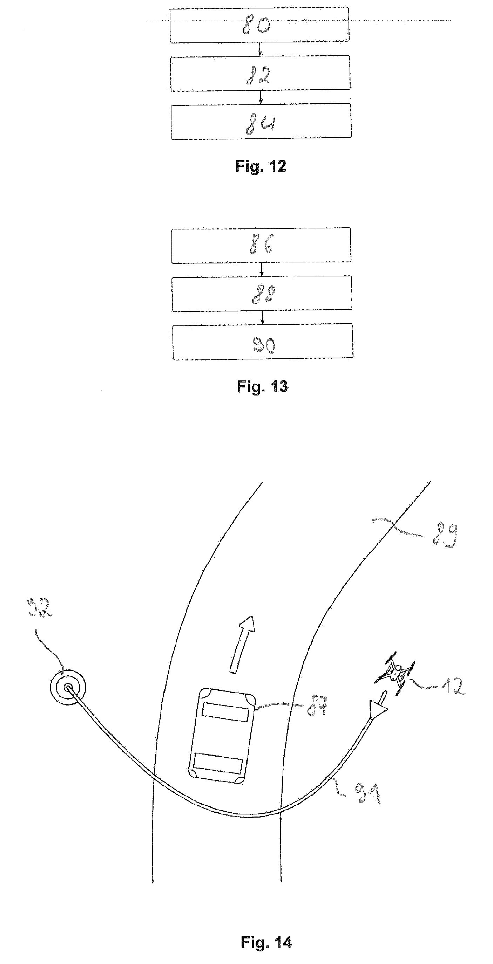

Gemäß einem weiteren Ausführungsbeispiel des Verfahrens, das in Fig. 12 dargestellt ist, werden im Schritt 80, der nach dem Schritt 66, wie er in Fig. 9 dargestellt ist, ausgeführt wird, die Parameter 21 oder geänderten Parameter 21, beispielsweise ein gewünschter Flugstil, Angaben über ein zu filmendes Objekt oder eine gewünschte Startposition, und ein oder mehrere ausgewählte Sektoren vom Kamerasystem 12 empfangen.

Im Schritt 82 erfolgt nun die Ausrichtung und Umpositionierung des Kamerasystems 12 in Abhängigkeit der Parameter 21. Hierbei wird beispielsweise ein Flug eines unbemannten Flugobjekts 18 dynamisch durch Positionsdaten des Flugobjekts 18 und/oder ein Positionssignal eines Benutzers, das durch ein Informationsverarbeitungsgerät 28 zur Verfügung gestellt wird, ausgeführt. Hierbei erfolgt eine Bewegung in Abhängigkeit eines gewählten, mit den Parametern 21 zuvor übertragenen, Flugstils. Außerdem werden, wie bereits zu Schritt 68 in Fig. 9 erklärt, Videoaufnahmen ausgeführt und vorzugsweise an den Server 22 übertragen.

Im Schritt 84 ist nun entweder ein zuvor gewünschter Aufzeichnungszeitraum oder eine Aufzeichnungsdauer abgelaufen oder ein Benutzer, der zuvor ein GPS-System für die Umpositionierung des Kamerasystems 12 zur Verfügung gestellt hat, verlässt einen vordefinierten Bereich 38. Hierdurch kehrt das Kamerasystem 12 in eine Warteposition, die vorzugsweise eine Aufladestation ist, zurück. Der Status des Kamerasystems 12 wird hierbei wieder so geändert, dass das Kamerasystem 12 für eine weitere Videoaufzeichnung zur Verfügung steht. Der Status wird in Form von Statusinformationen 32 an den Server 22 übertragen.

Gemäß einem weiteren in Fig. 13 dargestellten Ausführungsbeispiel des Verfahrens werden beim Übertragen der Parameter 21 für die Steuerung im Schritt 64a, 64b, gemäß Fig. 9, zu überwachende Zonen, Bereiche oder Sektoren für das Kamerasystem 12 übergeben. Im Schritt 86, der in Fig. 13 dargestellt ist, werden dann verschiedene Sektoren, zum Beispiel vorgegebene Eingangsbereiche, vom Kamerasystem 12 überwacht. Im Schritt 88 werden bewegliche und/oder warme Objekte mittels Sensoren 48, 50 des Kamerasystems 12 erfasst und die Kamera 14 auf diese Objekte gerichtet. Im Schritt 90 wird dann das Erfassen und Verfolgen dieser Objekte beendet, sobald diese den vorgegebenen Sektor oder Bereich 38 verlassen. Das Kamerasystem 12 fällt dann zurück in den Schritt 86 und überwacht den vorgegebenen Sektor.

Fig. 14 zeigt ein Objekt 87, das sich entlang einer Straße 89, die zum Beispiel eine Rennstrecke ist, bewegt. Das Kamerasystem 12 bewegt sich aufgrund des zuvor vorgegebenen Flugstils auf der Flugbahn 91 während sich die hier nicht sichtbare Kamera 14 immer auf das Objekt 87 ausrichtet und dieses filmt. Am Punkt 92 angekommen, wartet das Kamerasystem 12 beispielsweise auf ein weiteres Objekt 87, gleichzeitig hält es Flugregeln, die vorzugsweise vom Server 22 vorgegeben werden, wie hier das Vermeiden eines direkten Überflugs des Objekts 87, ein.

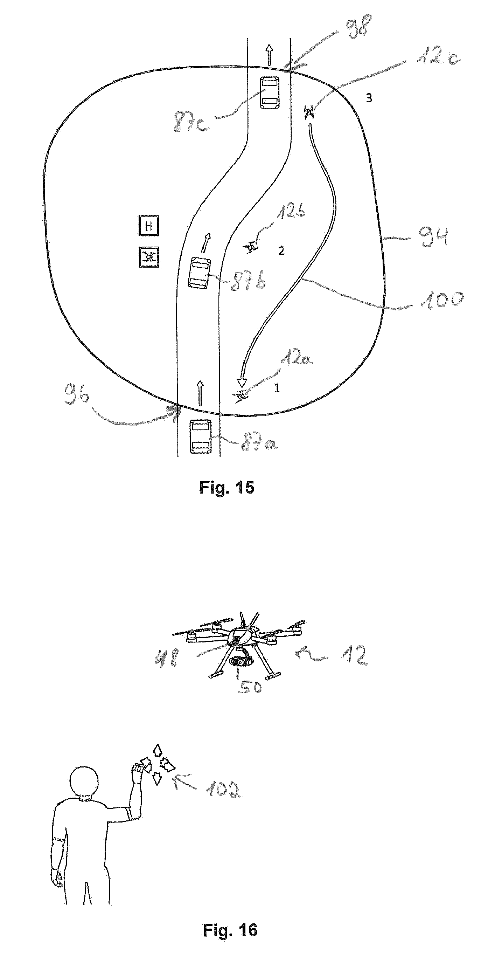

In Fig. 15 ist dargestellt, dass dem Kamerasystem 12 ein Sektor 94 zugeordnet ist, den das Kamerasystem 12 nicht verlassen darf. Hierfür sorgt die Steuerung des Kamerasystems 12 durch den Server 22. Selbst wenn ein Benutzer also ein Verlassen dieses Sektors 94 wünscht und dieses beispielsweise durch Parameter 21 oder Positionsdaten vorgeben würde, werden derartige Parameter 21 nicht an das Kamerasystem 12 übertragen, da dieses durch den Server 22 gesteuert wird, der die Parameter 21 begrenzt.

Im Beispiel in Fig. 15 sind drei Kamerasysteme 12a-12c dargestellt. Das Kamerasystem 12a überwacht einen Eingangsbereich 96 des Sektors 94. Bei Eintreffen des Objekts 87a beginnt das Kamerasystem 12a die Verfolgung des Objekts 87a, bis dieses im Austrittsbereich 98 den Sektor 94 verlässt. Das Kamerasystem 12b ist gerade bei der Verfolgung des Objekts 87b und das Kamerasystem 12c hat das Objekt 87c bis zum Ausgang des Sektors 94 verfolgt. Nachdem das Objekt 87c nun den Sektor 94 verlässt, kehrt das Kamerasystem 12c auf dem Flugweg 100 zurück zum Eingangsbereich 96 und wartet hier auf ein neues Objekt 87, das den Sektor 94 betritt.

Fig. 16 zeigt eine weitere alternative Möglichkeit, um auf die Umpositionierung oder den Start einer Aufnahme des Kamerasystems 12 einzuwirken. Hierzu werden Gesten 102, die zweidimensional und/oder dreidimensional sind, von den Sensoren 48, 50 aufgezeichnet und in Befehle verarbeitet. So kann zum Beispiel der Abstand zwischen dem Kamerasystem 12 und einem zu verfolgenden Objekt 87 variiert werden. Diese Einwirkungen auf die Steuerung sind jedoch nur in beschränktem Umfang möglich, da die Hauptsteuerung des Kamerasystems 12 durch den Server 22 erfolgt, der beispielsweise dafür sorgt, dass das Kamerasystem 12 auch, wenn diese durch Gesten 102 vorgegeben wird, vorbestimmte Sektoren 94 nicht verlässt.

## Patentansprüche

1. Verfahren zum Aufzeichnen von Videodaten mit mindestens einem auf Objekte ausrichtbaren Kamerasystem (12), umfassend die Schritte:
- Anmelden (62) mindestens eines Informationsverarbeitungsgeräts, zum Beispiel Mobilgerät, wie Mobiltelefon, Tablet-PC, Computer oder dergleichen, (28, 28a, 28b) an einem Server (22) mit Anmeldedaten (42), wobei das Informationsverarbeitungsgerät (28, 28a, 28b) vorzugsweise internetfähig ist,
- Übertragen (64a, 64b) von Parametern (21) für mindestens ein Kamerasystem (12) vom Informationsverarbeitungsgerät (28, 28a, 28b) an den Server (22),
- Übertragen (66) der Parameter (21) oder vom Server (22) geänderter Parameter (21) vom Server (22) an das Kamerasystem (12) und
- Aufzeichnen (68) von Videodaten durch eine Kamera (14) des Kamerasystems (12) während eines Ausrichtens des Kamerasystems (12) in Abhängigkeit von den Parametern (21).

2. Verfahren nach Anspruch 1, wobei mit den Anmeldedaten (42) eine Aufzeichnungsdauer oder ein Aufzeichnungszeitraum von dem Informationsverarbeitungsgerät (28, 28a, 28b) an den Server (22) übertragen wird und in Abhängigkeit der Aufzeichnungsdauer oder des Aufzeichnungszeitraums und in Abhängigkeit von Statusinformationen (32) des Kamerasystems (12) ein Zeitpunkt für eine oder eine Zeitdauer bis zu einer Verfügbarkeit des Kamerasystems (12) vom Server bestimmt und an das Informationsverarbeitungsgerät (28, 28a, 28b) übertragen wird, wobei die Statusinformationen (32) eine Verfügbarkeit des Kamerasystems (12) in Abhängigkeit zuvor übertragener Aufzeichnungsdauern oder Aufzeichnungszeiträumen umfassen.

3. Verfahren nach Anspruch 1 oder 2, wobei die Videodaten während der Aufnahme kontinuierlich und/oder nach Beendigung einer Aufnahme vom Kamerasystem (12) an den Server (22) und vom Server (22) an ein vorbestimmtes Ziel, vorzugsweise im Internet (25) oder das Informationsverarbeitungsgerät (28, 28a, 28b), oder vom Kamerasystem (12) direkt an das Informationsverarbeitungsgerät (28, 28a, 28b) übertragen werden.

4. Verfahren nach einem der vorhergehenden Ansprüche, wobei das Kamerasystem (12) umpositionierbar ist und ein oder mehrere Sektoren (94) für Positionen der Kamera (14) festgelegt sind, wobei die Parameter (21), die vom Informationsverarbeitungsgerät (28, 28a, 28b) an den Server (22) übertragen werden, Angaben für einen oder mehrere Sektoren (94) umfassen, in denen das Kamerasystem (12) in einer vorgegebenen Reihenfolge einfach oder wiederholt umpositioniert wird, und/oder der oder die die Umpositionierung der Kamera (14) beschränken.

5. Verfahren nach einem der vorhergehenden Ansprüche, wobei das Kamerasystem (12) ein unbemanntes Fahrzeug (18, 56, 58), insbesondere ein unbemanntes Luft- oder Landfahrzeug (18, 56, 58), wie ein unbemanntes Flugobjekt (18), insbesondere eine Drohne, wie ein Copter, insbesondere Quadrocopter oder Octocopter, umfasst und mit dem unbemannten Fahrzeug umpositionierbar ist.

6. Verfahren nach Anspruch 5, wobei die Parameter (21) eine Flug- oder Fahrbereich und/oder einen Startsektor, vorzugsweise einen oder mehrere festgelegte Sektoren (94), des unbemannten Fahrzeugs (18, 56, 58) umfassen und eine von den Parametern (21) abhängige Umpositionierung das Abfliegen oder Abfahren der Flug- oder Fahrbereich oder ein Anfliegen oder Anfahren des Startsektors umfasst.

7. Verfahren nach Anspruch 5 oder 6, wobei das unbemannte Fahrzeug (18, 56, 58) nach Erreichen eines Startsektors die Aufnahme der Videodaten beginnt, nachdem das unbemannte Fahrzeug (18, 56, 58) ein Startsignal vom Server (22), dem mobilen Gerät (28, 28a, 28b) oder vorgegebene Sensorsignale eines mit dem Kamerasystem (12) verbundenen Sensors (48, 50) empfangen hat.

8. Verfahren nach Anspruch 7, wobei
der Sensor (48, 50) ein Mikrofon ist und die vorgegebenen Sensorsignale vorgegebenen, in Signale umgewandelten Geräuschen entsprechen und/oder
der Sensor (48, 50) ein bildgebender Sensor, insbesondere ein Infrarotsensor oder ein Videosensor, ist, und die vorgegebenen Sensorsignale vorgegebenen, in Signale umgewandelten Gesten oder Bewegungen einer Person oder eines Objekts entsprechen.

9. Verfahren nach einem der vorhergehenden Ansprüche, wobei die Parameter (21) einen vorgegebenen Flugstil oder Fahrstil, umfassen und das Kamerasystem (12) während der Aufzeichnung den vorgegebenen Flugstil oder Fahrstil ausführt.

10. Verfahren nach einem der vorhergehenden Ansprüche, wobei die Parameter (21) ein vorbestimmtes Objekt (87, 87a, 87b, 87c) umfassen und das Kamerasystem (12) während der Umpositionierung das vorbestimmte Objekt (87, 87a, 87b, 87c) verfolgt.

11. Verfahren nach Anspruch 10, wobei
das vorbestimmte Objekt (87, 87a, 87b, 87c) dem oder einem weiteren Informationsverarbeitungsgerät (28a, 28b) entspricht und verfolgt wird, indem Positionsidentifikationsdaten des dem Objekt (87, 87a, 87b, 87c) entsprechenden Informationsverarbeitungsgeräts (28, 28a, 28b) an den Server (22) und/oder das Kamerasystem (12) übertragen werden, und das Kamerasystem (12) während des Umpositionierens direkt oder über den Server (22) die Positionsidentifikationsdaten des dem Objekt (87, 87a, 87b, 87c) entsprechenden Informationsverarbeitungsgeräts (28, 28a, 28b) empfängt, und/oder
das vorbestimmte Objekt (87, 87a, 87b, 87c) verfolgt wird, indem Referenzdaten eines zu verfolgenden Objekts (87, 87a, 87b, 87c) mit den Sensordaten eines bildgebenden Sensors (48, 50), zum Beispiel eines Infrarotsensors oder eines Videosensors, des Kamerasystems (12) verglichen werden, um das vorbestimmte Objekt (87, 87a, 87b, 87c) zu erkennen und zu verfolgen.

12. System zum Aufzeichnen von Videodaten mit einem auf Objekte (87, 87a, 87b, 87c) ausrichtbaren Kamerasystem (12), wobei das System mindestens ein Informationsverarbeitungsgerät (28, 28a, 28b) und einen Server (22) umfasst und das Informationsverarbeitungsgerät (28, 28a, 28b) und der Server (22) eingerichtet sind, um das Informationsverarbeitungsgerät (28, 28a, 28b) mit Anmeldedaten (42) am Server (22) anzumelden (62), und das System mindestens ein Kamerasystem (12) umfasst, wobei das Informationsverarbeitungsgerät (28, 28a, 28b) und der Server (22) eingerichtet sind, Parameter (21) für das Kamerasystem (12) vom Informationsverarbeitungsgerät (28, 28a, 28b) an den Server (22) zu übertragen (64a, 64b) und die Parameter (21) oder vom Server (22) geänderte Parameter (21) an das Kamerasystem (12) zu übertragen (66), wobei das Kamerasystem (12) Aktoren (16) umfasst, um die Kamera (14) auszurichten und das Kamerasystem (12) eingerichtet ist, die Ausrichtung in Abhängigkeit der Parameter (21) auszuführen, während das Kamerasystem (12) Videodaten aufzeichnet.

13. Server für ein System nach Anspruch 12, insbesondere zum Ausführen eines Verfahrens nach einem der Ansprüche 1 bis 11.

14. Kamerasystem für ein System nach Anspruch 12, insbesondere umfassend ein unbemanntes Fahrzeug (18, 56, 58), eine Kamera (14) und Aktoren (16) zum Verbinden der Kamera (14) am Fahrzeug (18, 56, 58), insbesondere zum Ausführen eines Verfahrens nach einem der Ansprüche 1 bis 11.

15. Informationsverarbeitungsgerät, insbesondere Mobiltelefon (28a) oder Smartwatch (28b), für ein System nach Anspruch 12, insbesondere zum Ausführen eines Verfahrens nach einem der Ansprüche 1 bis 11.
